Europäisches Patentamt

European Patent Office

Office européen des brevets

(11) Publication number: **0 395 179**
**A1**

## EUROPEAN PATENT APPLICATION

(21) Application number: **90201061.0**

(51) Int. Cl.⁵: **A01K 5/02**

(22) Date of filing: **26.04.90**

(30) Priority: **27.04.89 NL 8901070**

(43) Date of publication of application:
**31.10.90 Bulletin 90/44**

(84) Designated Contracting States:
**DE FR GB NL**

(71) Applicant: **PROLION DEVELOPMENT**
**Sikkelstraat 53**
**NL-2151 CP Nieuw Vennep(NL)**

(72) Inventor: **Hordijk, Jan**
**Kleine Maote 5**
**7123 CL Aalten(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) **Feed dispenser.**

(57) The invention relates to an apparatus for feeding cattle, comprising a housing with a head insertion opening allowing the cattle access to the feed, and a dosing device (10) for supplying the feed to the housing, which dosing device (10) is responsive to the presence of selected individual animals and is operated by the head of the cow by means of a lever (9). The lever (9) may, by means of a rod (25), be connected to a pawl (11) which can cooperate with a ratchet (12) by means of which the dosing device (10) is operated. The dosing device may comprise a dosing worm (5) in the form of a resilient, compressible helical worm.

FIG-1

EP 0 395 179 A1

## Feed dispenser

The invention relates to an apparatus for feeding cattle, comprising a housing having a head insertion opening allowing the cattle access to the feed, and a dosing device for supplying the feed to the housing, which dosing device is responsive to the presence of selected individual animals. In this apparatus known from Dutch patent application 7609780 an animal recognition system is used in which a transmitter-receiver is connected to a computer, which transmitter-receiver can be "operated" by a "responder" attached to a collar worn by the animal. Each responder has its own identification code and thus generates its own unique response signal to the computer, which in its turn drives a motor of a dosing wheel, depending on whether or not the cow in question is entitled to more feed.

A drawback of this system is that out on the land electricity is not always available, so that large batteries must be used for driving the dosing motor.

A second drawback is that when a cow does not finish her portion, the residue is left for a next animal, the information about a proper dosing of the two animals thus being lost.

The invention aims to overcome the aforementioned drawbacks. To this end the apparatus is characterized according to the invention in that the dosing device is operated by the cow's head by means of a lever. By means of a rod the lever may be connected to a pawl cooperating with a ratchet used to operate the dosing device.

Because the pawl can be brought into an operative position relative to the ratchet by means of a magnet and the magnet is operated by a computer comprising a transmitter-receiver which is responsive to a responder attached to a collar of an animal, periodically small portions can be supplied to the animal, which portions can thus be readily controlled by the computer.

In a further elaboration of the invention, a dosing worm, if one is provided in the dosing device, may be a resilient, compressible helical worm. Thus the mutual distance of the windings of the worm can be changed and hence the quantity of feed per rotation. By experiments the quantity of feed can thus be adjusted for each type of feed. This can readily be effected by means of a turning wheel arranged exterior to the housing of the dosing worm and used to vary the "pitch" of the dosing worm.

In a further elaboration of the invention, the means of avoiding the after-drop of extra feed, if any such means are provided, may comprise one or more blade wheels arranged under the outlet of the dosing device and constructed in such a way that the centre of gravity of the feed supplied is always on the side of the centre of rotation of the blade wheel(s). In this way it is ensured that no after-drop of feed will occur, even when the animal in question strikes its head against the wall of the trough.

The aforementioned means serving to avoid after-drop, may comprise a counterweight or resilient member counter-acting the rotation of a blade wheel and not releasing the blade wheel until the weight of the feed exceeds a given, set value.

Another possibility of avoiding after-drop is formed by a rotatable slide closing off the outlet of a supply hopper and being operated by a pawl and a ratchet mechanism driven by a lever operated by the animal to be fed.

To clarify the invention some embodiments of an apparatus for feeding cattle will now be described with reference to the drawings, in which:

Fig. 1 is a schematic longitudinal sectional view of an apparatus for feeding cattle;

Fig. 2 is a cross-section taken on the line II-II of Fig. 1;

Fig. 3 is a view similar to that of Fig. 1 of another embodiment of the dosing device;

Fig. 4 is a view similar to that of Fig. 3 of yet another embodiment of the dosing device;

Fig. 5 is a view similar to that of Fig. 1 of a fourth embodiment of the dosing device;

Fig. 6 is an enlarged detail of the apparatus according to Fig. 5; and

Fig. 7 is a view similar to that of Figs. 3 and 4 of yet another embodiment of the apparatus according to the invention.

The drawings show an apparatus for feeding cattle comprising a collar 3 worn around the neck of an animal, schematically shown, and comprising a "responder" 2, which responder can cooperate with a transmitter-receiver 1, which is part of a computer 4. The computer 4 "knows" what quantity of feed the animal in question (in this case: a cow) is allowed to have in this eating cycle. That particular quantity of feed is transported via a helical worm 5 operated by a lever 9 from a supply hopper 7 to a trough 8. The somewhat flattened lever operates a dosing system 10 comprising a pawl 11 and a ratchet 12. Thus the cow receives its feed, that is, if the computer 4 has established that the animal in question is entitled to more feed, in which case the magnet 13 brings the pawl 11 into the operative position.

An important advantage of this system resides in the fact that the feed is supplied at an eating rate which is determined by the animal itself. Further, a situation is thus prevented that sometimes occurs when animals that eat slowly are pushed away by more aggressive, waiting animals when they see there is a lot of feed in the trough.

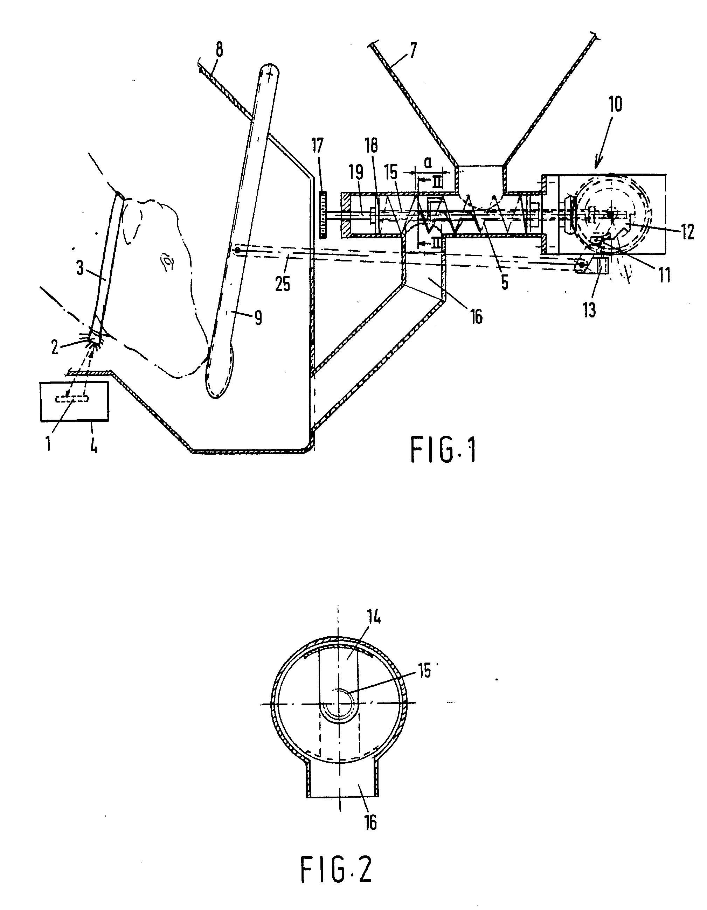

In order to avoid the disadvantage described hereinabove an anti-spilling slide 14 (Fig. 2) is provided which in the screwed embodiment shown is mounted on shaft 15 of the screw and which after each operative movement of the head of the cow in question closes off an outlet opening 16 to the trough 8.

As will appear from the drawings, the helical worm 5 can be moved on the screw thread 19 by means of a turning wheel 17 and a pressure plate 18, thus permitting the mutual distance a between the windings to le adjusted and hence the amount of feed per rotation.

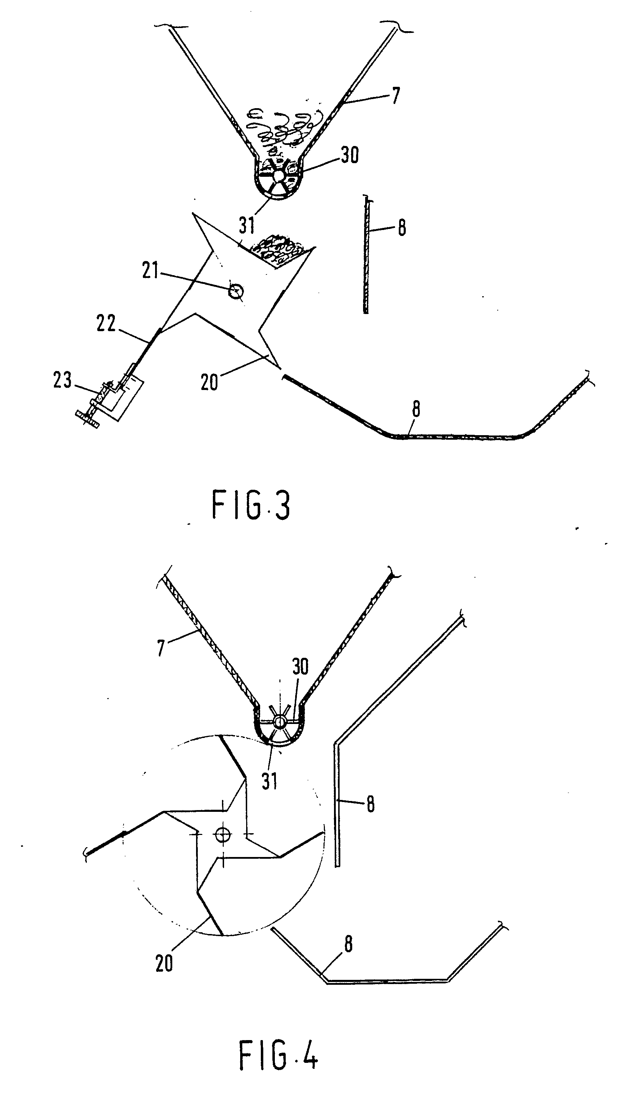

When it is desirable to dose by weight, one of the embodiments shown in Figs. 3, 4 or Figs. 5 and 6 can be used. In the embodiment according to Fig. 3, for example, a blade wheel 20 is used which is so arranged and constructed that as a result the centre of gravity of the amount of feed to be taken up should always be at a distance as constant as possible on the side of the centre of rotation 21 of the wheel 20. To control the tumbling of the blade wheel an adjustable counter-weight is provided as a counterforce in the form of a resilient member 22 which does not release the blade wheel until the weight of the feed exceeds the set value. This value can be adjusted by means of a screw 23.

In the apparatuses shown in Figs. 3, 4 and 5 the feed is supplied from a supply hopper 7 via a cellular wheel 30 and an outlet opening 31 to the trough 8 or the blade wheel 20.

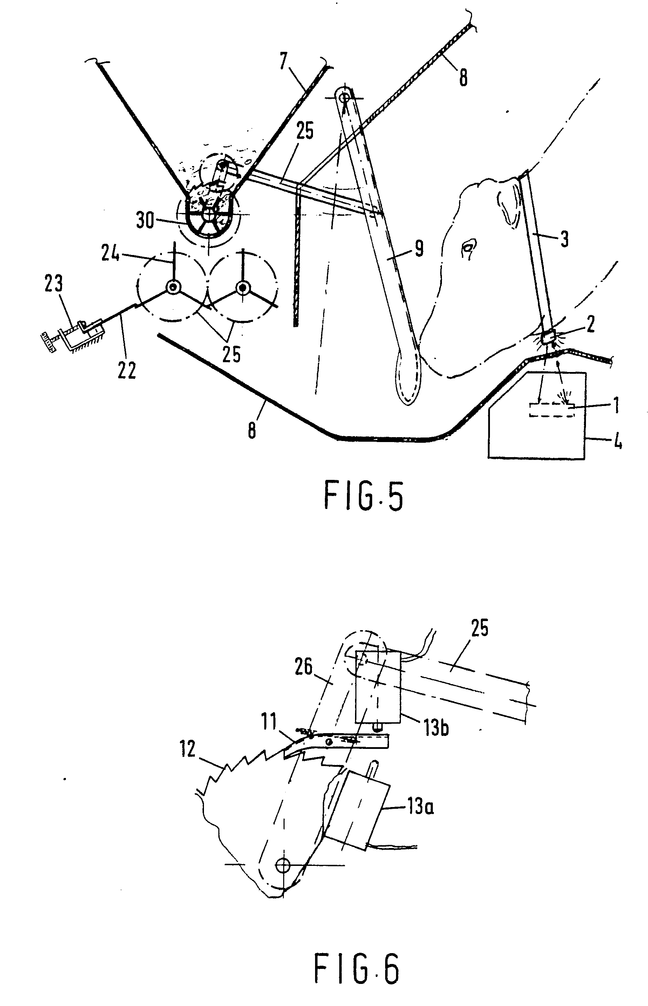

In the embodiment shown in Figs. 5 and 6, in which like reference numerals refer to like parts as shown in Fig. 1, the head of the cow operates an intermediate rod 26 by means of the lever 9 and a rod 25, on which intermediate rod a pawl 11 is mounted for cooperation with the ratchet 12. The pawl 11 can be operated either by the magnet 13a or by the magnet 13b. This depends on whether or not the animal in question is entitled to more feed according to the computer. As Fig. 6 clearly shows, the centre of rotation of the pawl 11 is in the axis of the intermediate rod 26, whose one end rotates about the same axis as does the ratchet 12.

As Fig. 5 further shows, instead of a single blade wheel, as shown in Figs. 3 and 4, two blade wheels 24 can be used, which are coupled by means of gears 25. The advantage of this construction is that it allows blade wheels with a relatively small mass to be used, whereas in the apparatus shown in Figs. 1 and 2 blade wheels are used which have a large mass as a result of which they tend to continue "rattling" once they start rotating. This is absolutely not the case in the construction according to the Figs. 5, 6.

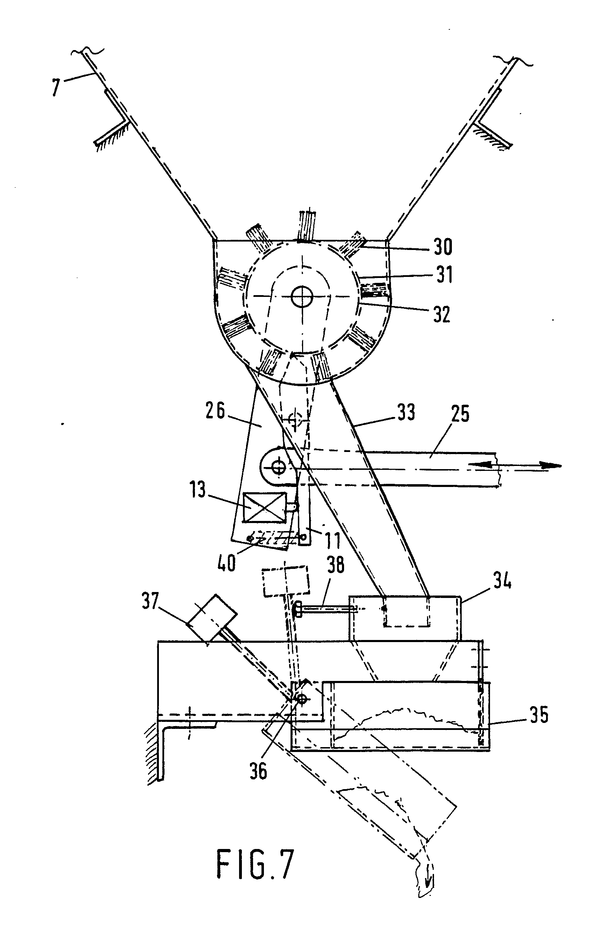

In the embodiment shown in Fig. 7 like parts as shown in the apparatus according to Fig. 5 are designated by like reference numerals. The difference resides in the fact that in the apparatus according to Fig. 7 instead of a blade wheel a brush 30 is used (which will prevent the blades from becoming wedged relatively to the surrounding housing), the brush bundles being arranged helically relatively to a cylindrical support 31. The cylindrical support 31 is arranged around a pawl or friction wheel 32, which, as to its function, can be compared with the ratchet 12 in the apparatus according to Fig. 1.

Cooperating with the brushes 30 is an intermediate rod 26 which is operated by a rod 25, which is connected to a lever (not shown) operated by the animal in question. Further a pawl 11 is rotatably mounted on the intermediate rod 26 for cooperation with a magnet 13 in a similar way as in the apparatus according to Fig. 1. The pawl 11 is further influenced by a spring 40, which ensures that the pawl engages the magnet 13.

Provided under the outlet opening of the dosing wheel and connected to the housing thereof is a chute 33, whose other end terminates in a funnel-shaped member 34. The funnel-shaped member 34 is mounted above a rocking container 35. The rocking container 35 is rotatably mounted on the frame by means of a shaft 36. The rocking container is influenced by an adjustable counterweight 37, i.e. that when enough feed has come down in the rocking container 35, its weight will overcome the resistance offered by the weight 37, thus causing the rocking container to turn into the tilted position indicated by the chain-dotted lines and allowing the feed to drop into a trough (not shown).

In this way it is ensured that the eating animal can no longer rely on any after-drop of feed being gained by its hitting its head against the wall of a trough since such after-drop of feed will be received by the rocking container 35 which has meanwhile returned to its horizontal position.

It is observed that the funnel 34 is further provided exteriorly with an adjustment bolt 38 which is used to set the maximum tilted position on the lever with the counterweight 37, which ensures at all times that after the feed has dropped the rocking container returns to its receiving position again as shown by the solid lines.

## Claims

1. An apparatus for feeding cattle, comprising a housing with a head insertion opening allowing the cattle access to the feed, and a dosing device for supplying the feed to the housing, said dosing device being responsive to, the presence of selected individual animals, characterized in that the dosing device is operated by the head of the cow by means of a lever.

2. Apparatus according to claim 1, characterized in that the lever, by means of a rock, is connected to a pawl which can cooperate with a ratchet by means of which the dosing device is operated.

3. Apparatus according to claim 2, characterized in that the pawl can be brought into an operative position relative to the ratchet by means of a magnet, and the magnet is operated by a computer equipped with a transmitter-receiver which is responsive to a responder attached to a collar of an animal.

4. Apparatus according to one of the preceding claims, in which the dosing device comprises a dosing worn, characterized in that the dosing worm is a resilient, compressible helical worm.

5. Apparatus according to claim 4, characterized in that the dosing worm can be adjusted by means of a turning wheel arranged outside of the housing of the dosing worm, said turning wheel being used to adjust the "pitch" of the dosing worm.

6. Apparatus according to one or more of the preceding claims, comprising means for preventing the after-drop of extra feed, characterized in that said means comprise one or more blade wheels arranged under the outlet opening of the dosing device, said blade wheels being so constructed that the centre of gravity of the feed supplied is invariably on the side of the centre(s) of rotation of the blade wheel(s).

7. Apparatus according to claim 6, characterized by a counterweight or resilient number counteracting the rotation of the blade wheel, said ccunterweight or resilient member not releasing the blade wheel until the weight of the feed exceeds a given, set value.

8. Apparatus according to one or more of the preceding claims, characterized by a rotatable slide closing off the outlet of a supply hopper, said slide being fixedly connected to the shaft of the dosing worm.

9. Apparatus according to one or more of claims 1-5, comprising means for preventing the after-drop of extra feed, characterized in that said means comprise a rocking container arranged under the outlet opening of the dosing device, said rocking container being so constructed that the centre of gravity of the feed supplied is invariably on the side of the centre of rotation of the rocking container.

10. Apparatus according to claim 9, characterized by a counterweight counteracting the rotation of the rocking container, said counterweight causing the rocking container not to tilt until the weight of the feed exceeds a given, set value.

11. Apparatus according to claim 9 or 10, characterized in that the dosing is effected by means of a brush-shaped member.

12. Apparatus according to claim 11, characterized in that the brush bundles are arranged helically on a support.

13. Apparatus according to one or more of claims 9-12, characterized in that the tilting path of the rocking container can be adjusted by means of a bolt.

FIG·1

FIG·2

FIG·3

FIG·4

FIG·5

FIG·6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3033164 (EVERS)<br>* column 1, lines 27 - 40; figures 1-3 *<br>--- | 1, 2 | A01K5/02 |
| A | GB-A-2154415 (ROBERTS)<br>* abstract; figures 1-3 *<br>--- | 6, 7 | |
| A | US-A-4508061 (SWEARINGIN)<br>--- | | |
| A | DE-U-8716831 (KIMMEYER)<br>--- | | |
| A | EP-A-029278 (HARMSEN)<br>--- | | |
| A,D | DE-A-2739069 (BRINKMANN & NIEMEYER)<br>& NL-A-7609780<br>----- | | |

| | TECHNICAL FIELDS SEARCHED (Int. Cl.5) |
|---|---|
| | A01K |

The present search report has been drawn up for all claims

| Place of search | Date of completion of the search | Examiner |
|---|---|---|
| THE HAGUE | 30 JULY 1990 | VON ARX V.U. |